# EUROPEAN PATENT SPECIFICATION

(11) **EP 3 355 329 B1**
(45) Date of publication and mention of the grant of the patent: **14.04.2021**
(21) Application number: 16874280.7
(22) Date of filing: 25.02.2016
(51) Int. Cl.: H01G 11/32, H01G 11/06, H01G 11/38, H01G 11/46, H01G 11/50, H01G 11/66, H01G 11/70, H01G 11/86, H01M 10/44

(54) **METHOD OF MANUFACTURING A LITHIUM ION CAPACITOR AND CAPACITOR OBTAINED BY SAID METHOD**
VERFAHREN ZUR HERSTELLUNG EINES LITHIUM-IONEN-KONDENSATORS UND EINES IM RAHMEN DES VERFAHRENS ERHALTENEN KONDENSATORS
PROCÉDÉ DE FABRICATION D'UN CONDENSATEUR LITHIUM ION ET CONDENSATEUR OBTENU PAR LEDIT PROCÉDÉ

(30) Priority: 16.12.2015 CN 201510947373
(43) Date of publication of application: 01.08.2018
(73) Proprietor: Shanghai Aowei Technology Development Co., Ltd., Shanghai 201203 (CN)
(72) Inventor: WU, Mingxia, Shanghai 201203 (CN); AN, Zhongxun, Shanghai 201203 (CN); HUANG, Tingli, Shanghai 201203 (CN); YAN, Liangliang, Shanghai 201203 (CN); FAN, Lingling, Shanghai 201203 (CN)
(74) Representative: Sun, Yiming
(86) International application number: PCT/CN2016/074522
(87) International publication number: WO 2017/101214

(56) References cited:
- WO-A1-2008/041714
- CN-A- 103 050 290
- CN-A- 104 412 347
- CN-A- 104 466 259
- CN-A- 105 355 457
- KR-B1- 101 179 629
- US-A1- 2013 224 603
- GERALD S. RELLICK ET AL: "Mechanisms of orientation and graphitization of hard-carbon matrices in carbon/carbon composites", JOURNAL OF MATERIALS RESEARCH, vol. 7, no. 10, 1 October 1992 (1992-10-01), pages 2798-2809, XP055555484, US ISSN: 0884-2914, DOI: 10.1557/JMR.1992.2798

## Description

### TECHNICAL FIELD

The present invention relates to a lithium ion capacitor and a pre-doping formation method thereof.

### BACKGROUND ART

In recent years, lithium-ion secondary batteries have been greatly developed. A negative electrode of this battery generally uses a carbon material such as graphite, and a positive electrode thereof uses a lithium-containing metal oxide such as lithium cobalt oxide or lithium manganate. After the battery is assembled, the positive electrode provides lithium ions to the negative electrode during charging, and the lithium ions in the negative electrode return to the positive electrode during discharging. Therefore, it is called "rocking chair battery". However, the cycle life of the lithium-ion secondary battery is still restricted because the negative electrode material tends to deform structurally during deintercalation of lithium. Therefore, in recent years, the research on a system in which the lithium-ion secondary battery and a supercapacitor are combined together has become a new hot spot.

At present, there are two ways to combine the two types of energy storage systems: the supercapacitor and the lithium-ion secondary battery: the first way is "externally combined", i.e., cells of the supercapacitor and the lithium-ion secondary battery are combined into an energy storage device or system through a power management system; the second way is "internally combined", i.e., the supercapacitor and the lithium-ion secondary battery are organically combined in one cell. The "internally combined" type power supply system has the advantages of high power, light weight, small size and low cost, can ensure the consistency of the cells and reduce the complexity of the management system, and thus has become the focus of today's research.

There is a lithium-ion capacitor whose positive electrode has both a lithium-ion energy storage function and a double electrode layer energy storage function and whose negative electrode serves for lithium-ion energy storage. This system has a higher voltage and can achieve high power. The positive electrode of this system has a double electrode layer energy storage function and a lithium-ion chemical energy storage function, and therefore the specific energy can be improved at the same time. Therefore, this system is an ideal system. However, because the positive electrode has different energy storage ways, and the potentials of the stored energy cannot be matched exactly, how to uniformly pre-doping is a difficult problem. In the pre-doping methods currently used in Japan and South Korea, holes are formed in positive and negative current collectors, such that lithium plates at both ends of the cell serve for pre-doping as a lithium source. In this method, the lithium ions released by the lithium plates can pass through the holes in the surfaces of the current collectors to reach the surface of the negative electrode to complete the pre-doping. However, in order to ensure the mechanical strength and electrical conductivity of the current collector, this method requires a porous current collector (the current collector is expensive, and at present, no manufacturer in China can mass-produce it). The actual passing rate of the lithium ions is lower and the pre-doping cannot be completed quickly due to the impossibility of excessive holes in the porous current collector itself. Meanwhile, the uniformity of active substances in the various parts of the negative electrode plate is the key to the consistency of cells of the capacitor and determines whether a plurality of capacitors can be connected in series into groups in future.

Existing lithium-ion capacitor technologies are generally divided into two types: the use of a porous current collector and the use of a non-porous current collector. The formation process of the former is relatively simple, but the process is very complex and the cost of the current collector is high. The latter is generally pre-doped with a third electrode lithium source, but it is difficult to achieve a uniform effect, thereby adversely affecting the cycling of the lithium-ion capacitor. For example, a patent "Lithium Pre-intercalation Method for Negative Electrode of Lithium Ion Capacitor" (CN201510522888) filed by Institute of Electrical Engineering, Chinese Academy of Sciences discloses a lithium pre-intercalation method for a negative electrode of a lithium ion capacitor negative. In this method, the lithium pre-intercalation process is to place a metal lithium electrode and a cell in a face-to-face manner and separate them by a diaphragm, a bias voltage is applied between the metal lithium electrode and the negative electrode, and the negative electrode is lithium-intercalated in a constant voltage discharging manner.

US 2013/224603 A1 discloses a communication device including a communication unit configured to send and receiving data via an attachable and detachable line, a power controller configured to reduce a power supply to the communication unit when a certain condition is satisfied, and a determination unit configured to determine whether or not a setting for sending and receiving data via the line by the communication unit is made. The power controller maintains the power supply to the communication unit at a call-receivable level, if it is determined that the setting for using the line is made.

KR 101 179 629 B1 discloses a method for manufacturing a lithium-ion capacitor according to a pre-doping process of lithium ions and the lithium-ion capacitor therefrom are provided to supply stable charge-discharge characteristics in greater than 4.0V by including a cathode electrode between an anode electrode and a lithium metal electrode. A lithium-ion capacitor includes a case, electrolyte and an electrochemistry cell. The chemistry cell includes an anode electrode, a cathode electrode and a lithium metal electrode. A lithium ion of the lithium metal electrode is carried to the cathode electrode. The cathode electrode and the anode electrode are electrochemically contacted. The absorbed lithium ion on the anode electrode is carried to the cathode electrode. The lithium metal electrode and the cathode electrode are electrochemically contacted.

### SUMMARY OF THE INVENTION

A main objective of the present invention is to solve the defect that the uniform effect of pre-doping in the prior art is not good.

In order to fulfill objective said before, a pre-doping formation method for a lithium ion capacitor as defined in claim 1 and a lithium ion capacitor as defined in claim 6 formed with this method were provided in this invention

A pre-doping formation method for a lithium ion capacitor having a positive electrode comprises porous carbon and lithium-intercalated metal oxide, a negative electrode comprising non-graphitizable carbon, and a porous current collector, the positive electrode, the negative electrode, and the current collector forming a cell, characterized in that: a third metal lithium electrode and the cell are arranged in a face-to-face manner and separated by a separator, and the method comprises the following steps:
Step 1, lithium-intercalating the negative electrode by taking the lithium-intercalated oxide in the positive electrode as a lithium source, and providing a current between the negative electrode and the positive electrode;
Step 2, supplementing, by the third metal lithium electrode, lithium ions to the metal oxide in a lithium-deintercalated state of the positive electrode, by providing a current between the third metal-lithium electrode and the positive electrode; and
Step 3, at the end of charging cutting off the third metal lithium electrode from the cell, and sealing edges of the cell to obtain the formed lithium capacitor.

The lithium-intercalated metal oxide in the positive electrode includes one of lithium cobalt oxide, nickel cobalt lithium manganate, lithium manganite, lithium manganate, lithium permanganate, nickel cobalt lithium aluminate, lithium nickelate, lithium iron phosphate, and lithium vanadium phosphate.

An electrode plate size is 43 × 30mm, a positive electrode surface density is 160g/m², and a negative electrode surface density is 85g/m². There are 15 positive electrode plates and 16 negative electrode plates. A cellulose separator is adopted for laminating. A lithium plate is placed at two sides of the cell respectively.

The present invention further comprises a formation method of a lithium ion capacitor, which is characterized by comprising the following steps:
Step 1, lithium-intercalating the negative electrode by taking the lithium-intercalated oxide in the positive electrode as a lithium source; and
Step 2, supplementing, by a third electrode lithium plate, lithium ions to the metal oxide in a lithium-deintercalated state of the positive electrode.

The step 1 solves the problem that the lithium ions cannot be uniformly and vertically doped to the negative electrode, and enables the negative electrode to form a well-uniform SEI film while keeping a carbon material of the negative electrode in a uniform lithium-intercalated state. The step 2 supplements the lithium required for the recovery of the lithium-deintercalated state of the positive electrode. At the same time, the two steps are conducive to balancing and matching the potentials of the lithium-containing oxide and the active carbon of the positive electrode.

Further, the step 1 is divided into two substeps:
in the first substep, the current is 0.01C to 0.05C, and the charging time is 2 to 10h;
In the second substep, the current is 0.2C to 1C.

The current in the step 2 is 0.2C to 1C.

In the step 1, the total charge provided by the current is 20% -50% of the total capacity of the negative electrode.

The charge provided by the current in the step 2 is equal to the charge provided by the current in the step 1.

Compared with the prior art, the present invention has the advantages that the lithium ion capacitor can be formed (pre-doped) in two steps so as to make the doping of the negative electrode more stable, efficient and uniform, the cycle life of the capacitor can be prolonged, the consistency of the capacitor can be improved, and the assembling of a module and a system can be facilitated.

### BRIEF DESCRIPTION OF THE DRAWINGS

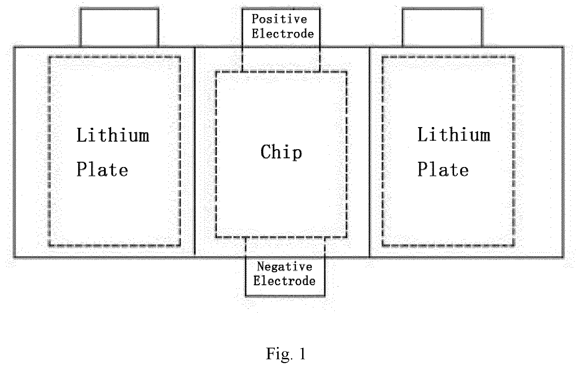

Fig. 1 is a schematic structural drawing of a lithium ion capacitor in an embodiment;

### DETAILED DESCRIPTION OF THE PREFERRED EMBODIMENTS

The present invention is further described below with reference to the embodiments and the accompanying drawings.

A lithium ion capacitor in the present embodiment has a structure as follows.

As shown in Fig. 1, a positive electrode of the capacitor comprises porous carbon and lithium-intercalated metal oxide, and a negative electrode thereof is non-graphitizable carbon. The metal lithium electrode and a cell are arranged in a face-to-face manner and separated by separator. A porous current collector is used as the current collector.

In a preparation process of the lithium ion capacitor, a positive electrode formula and a negative electrode formula are as shown in Tables 1 to 3 (columns in the Tables 2 and 3 are the same as in Table 1). Table 1 illustrates Embodiments 1 to 5; Table 2 illustrates Embodiments 6-10; Table 3 illustrates Embodiments 11 to 12. An electrode plate size is 43 × 30mm, a positive electrode surface density is 160g/m², and a negative electrode surface density is 85g/m². There are 15 positive electrode plates and 16 negative electrode plates. A cellulose separator is adopted for laminating. A lithium plate is placed at two sides of the cell respectively.

The lithium ion capacitor is formed according to the following steps: 1, lithium-intercalating the negative electrode by taking the lithium-intercalated oxide in the positive electrode as a lithium source, and charging a middle cell with a low current for a certain time first, and then with a high current till reaching 30% of the total capacity of the negative electrode; and 2, supplementing, by a third electrode lithium plate, lithium ions to the metal oxide in a lithium-deintercalated state of the positive electrode, wherein a charge provided by the current is equal to the charge provided by the current in the step 1. The formation current and the charging time are as shown in Tables 1 to 3. At the end of charging, the lithium plates at two sides are cut off and edges are then sealed to obtain the formed lithium ion capacitor which can be charged and discharged. The initial capacity and the internal resistance as well as the capacity and the internal resistance after 50000 cycles are tested.

**Table 1**

| No. | Positive Electrode Formula | Negative Electrode Formula | Current in Step 1 | Current in Step 2 | Initial Value | | | After 50000 Circulations | | |
|---|---|---|---|---|---|---|---|---|---|---|
| | | | | | AC Internal Resistance (mΩ) | DC Internal Resistance (mΩ) | Capacity (F) | AC Internal Resistance (mΩ) | DC Internal Resistance (mΩ) | Capacity Retention Rate% |
| Embodiment 1 | Nickel cobalt lithium manganate:porous carbon:SP:PVDF= 60:20:10:10 | Hard carbon:SP:PVD F=92:2:6 | Charging with 0.01C for 10h, and then charging with 0.2C till reaching 30% of the total capacity of the negative electrode | 0.2C | 11.1 | 19.1 | 505 | 14.1 | 27.3 | 80 |
| Embodiment 2 | Nickel cobalt lithium manganate :porous carbon:SP:PVDF= 60:20:10:10 | Hard carbon:SP:PVD F=92:2:6 | Charging with 0.02C for 5h, and then charging with 0.2C till reaching 30% of the total capacity of the negative electrode | 0.2C | 11.3 | 17.9 | 509 | 15.9 | 28.1 | 83 |
| Embodiment 3 | Nickel cobalt lithium manganate:porous carbon:SP:PVDF= 60:20:10:10 | Hard carbon:SP:PVD F=92:2:6 | Charging with 0.05C for 2h, and then charging with 0.2C till reaching 30% of the total capacity of the negative electrode | 0.2C | 11.6 | 18.5 | 516 | 13.9 | 26.9 | 73 |
| Embodiment 4 | Nickel cobalt lithium manganate:porous carbon:SP:PVDF= 60:20:10:10 | Hard carbon:SP:PVD F=92:2:6 | Charging with 0.02C for 5h, and then charging with 0.4C till reaching 30% of the total capacity of the negative electrode | 0.2C | 11.4 | 18.3 | 511 | 13.6 | 28.3 | 82 |
| Embodiment 5 | Nickel cobalt lithium manganate:porous carbon:SP:PVDF= 60:20:10:10 | Hard carbon:SP:PVD F=92:2:6 | Charging with 0.02C for 5h, and then charging with 0.8C till reaching 30% of the total capacity of the negative electrode | 0.2C | 11.2 | 18.1 | 518 | 13.8 | 29.3 | 75 |

**Table 2**

| | | | | | | | | | | |
|---|---|---|---|---|---|---|---|---|---|---|
| Embodiment 6 | Nickel cobalt lithium manganate: porous carbon: SP: PVDF=60:20:10:10 | Hard carbon: SP: PVDF=92: 2:6 | Charging with 0.02C for 5h, and then charging with 1C till reaching 30% of the total capacity of the negative electrode | 0.4C | 11.3 | 18.2 | 519 | 14.8 | 28.9 | 82 |
| Embodiment 7 | Nickcl cobalt lithium manganate: porous carbon: SP: PVDF=60:20:10:10 | Hard carbon: SP: PVDF=92: 2:6 | Charging with 0.02C for 5h, and then charging with 0.2C till reaching 30% of the total capacity of the negative electrode | 0.6C | 11.4 | 18.1 | 520 | 14.0 | 27.3 | 80 |
| Embodiment 8 | Nickel cobalt lithium manganate: porous carbon: SP: PVDF=60:20:10:10 | Hard carbon: SP: PVDF=92: 2:6 | Charging with 0.02C for 5h, and then charging with 0.2C till reaching 30% of the total capacity of the negative electrode | 0.8C | 11.2 | 18.5 | 524 | 14.8 | 27.3 | 82 |
| Embodiment 9 | Nickel cobalt lithium manganate: porous carbon: SP: PVDF=60:20:10:10 | Hard carbon: SP: PVDF=92: 2:6 | Charging with 0.02C for 5h, and then charging with 0.2C till reaching 30% of the total capacity of the negative electrode | 1C | 11.1 | 17.9 | 508 | 13.5 | 27.8 | 77 |
| Embodiment 10 | Nickel cobalt lithium manganate: porous carbon: SP: PVDF=60:20:10:10 | Hard carbon: SP: PVDF=92: 2:6 | Charging with 0.02C for 5h, and then charging with 0.2C till reaching 50% of the total capacity of the negative electrode | 0.2C | 11.2 | 17.6 | 521 | 13.9 | 27.6 | 90 |

**Table 3**

| | | | | | | | | | | |
|---|---|---|---|---|---|---|---|---|---|---|
| Embodiment 11 | Nickel cobalt lithium manganate: porous carbon: SP: PVDF=60:20:10:10 | Hard carbon: SP: PVDF=92: 2:6 | Charging with 0.02C for 5h, and then charging with 0.2C till reaching 20% of the total capacity of the negative electrode | 0.2C | 11.2 | 18.8 | 511 | 13.6 | 28.3 | 79 |
| Embodiment 12 | lithium manganate: porous carbon: SP: PVDF=60:20:10:10 | Hard carbon: SP: PVDF=92: 2:6 | Charging with 0.02C for 5h, and then charging with 0.2C till reaching 20% of the total capacity of the negative electrode | 0.2C | 13.0 | 20.6 | 480 | 15.8 | 32.3 | 74 |

## Claims

1. A pre-doping formation method for a lithium ion capacitor having a positive electrode comprising porous carbon and lithium-intercalated metal oxide, a negative electrode comprising non-graphitizable carbon, and a porous current collector, the positive electrode, the negative electrode, and the current collector forming a cell, **characterized in that**:
a third metal lithium electrode and the cell are arranged in a face-to-face manner and separated by a separator, and the method comprises the following steps:
Step 1, lithium-intercalating the negative electrode by taking the lithium-intercalated oxide in the positive electrode as a lithium source, and providing a current between the negative electrode and the positive electrode;
Step 2, supplementing, by the third metal lithium electrode, lithium ions to the metal oxide in a lithium-deintercalated state of the positive electrode, by providing a current between the third metal-lithium electrode and the positive electrode; and
Step 3, at the end of charging cutting off the third metal lithium electrode from the cell, and sealing edges of the cell to obtain the formed lithium capacitor.

2. The formation method for the lithium ion capacitor according to claim 1, wherein the step 1 is divided into two substeps:
in the first substep, the current is 0.01C to 0.05C, and the charging time is 2 to 10h;
In the second substep, the current is 0.2C to 1C.

3. The formation method for the lithium ion capacitor according to claim 2, wherein the current in the step 2 is 0.2C to 1C.

4. The formation method for the lithium ion capacitor according to claim 2, wherein in the step 1, the total charge provided by the current is 20% -50% of the total capacity of the negative electrode.

5. The formation method for the lithium ion capacitor according to claim 2, wherein the charge provided by the current in the step 2 is equal to the charge provided by the current in the step 1.

6. A lithium ion capacitor formed with the method according to any preceding claim.

7. The lithium ion capacitor according to claim 6, wherein the lithium-intercalated metal oxide in the positive electrode includes one of lithium cobalt oxide, nickel cobalt lithium manganate, lithium manganite, lithium manganate, lithium permanganate, nickel cobalt lithium aluminate, lithium nickelate, lithium iron phosphate, and lithium vanadium phosphate.

8. The lithium ion capacitor according to claim 6, wherein the positive electrode comprises 15 positive electrode plates, the negative electrode comprises 16 negative electrode plates, each electrode plate having an electrode plate size is 43 × 30mm, a positive electrode surface density is 160g/m², and a negative electrode surface density is 85g/m²; the separator is a cellulose separator; and the third metal lithium electrode comprises two metal lithium electrode plates placed at two sides of the cell.

## Patentansprüche

1. Vordotierungsausbildungsverfahren für einen Lithiumionenkondensator mit einer positiven Elektrode, die porösen Kohlenstoff und ein eingelagertes Lithium aufweisendes Metalloxid umfasst, einer negativen Elektrode, die nicht graphitierbaren Kohlenstoff umfasst, und einem porösen Stromableiter, wobei die positive Elektrode, die negative Elektrode und der Stromableiter eine Zelle ausbilden, **dadurch gekennzeichnet, dass**:
eine dritte, metallisches Lithium umfassende Elektrode und die Zelle zueinander hin weisend angeordnet und durch einen Separator getrennt sind und das Verfahren folgende Schritte umfasst:
Schritt 1: Einlagern von Lithium in die negative Elektrode durch Verwenden des eingelagertes Lithium aufweisenden Oxids in der positiven Elektrode als Lithiumquelle und Bereitstellen eines Stroms zwischen der negativen Elektrode und der positiven Elektrode;
Schritt 2: Auffüllen - durch die dritte, metallisches Lithium umfassende Elektrode - von Lithiumionen in dem in einem Zustand mit mangelnder Lithiumeinlagerung befindlichen Metalloxid der positiven Elektrode durch Bereitstellen eines Stroms zwischen der dritten, metallisches Lithium umfassenden Elektrode und der positiven Elektrode; und
Schritt 3: am Ende des Ladens, Abschneiden der dritten, metallisches Lithium umfassenden Elektrode von der Zelle und Versiegeln der Ränder der Zelle, um den ausgebildeten Lithiumkondensator zu erhalten.

2. Ausbildungsverfahren für den Lithiumionenkondensator nach Anspruch 1, wobei der Schritt 1 in zwei Teilschritte unterteilt ist:
im ersten Teilschritt beträgt der Strom 0,01 C bis 0,05 C und die Ladezeit beträgt 2 bis 10 h;
im zweiten Teilschritt beträgt der Strom 0,2 C bis 1 C.

3. Ausbildungsverfahren für den Lithiumionenkondensator nach Anspruch 2, wobei der Strom in Schritt 2 0,2 C bis 1 C beträgt.

4. Ausbildungsverfahren für den Lithiumionenkondensator nach Anspruch 2, wobei im Schritt 1 die Gesamtladung, die durch den Strom bereitgestellt wird, 20 % - 50 % der Gesamtkapazität der negativen Elektrode beträgt.

5. Ausbildungsverfahren für den Lithiumionenkondensator nach Anspruch 2, wobei die Ladung, die durch den Strom im Schritt 2 bereitgestellt wird, gleich der Ladung ist, die durch den Strom im Schritt 1 bereitgestellt wird.

6. Lithiumionenkondensator, ausgebildet mit dem Verfahren nach einem vorangehenden Anspruch.

7. Lithiumionenkondensator nach Anspruch 6, wobei das eingelagertes Lithium aufweisende Metalloxid in der positiven Elektrode eines aus Lithium-Cobalt-Oxid, Nickel-Cobalt-Lithium-Manganat, Lithiummanganit, Lithiummanganat, Lithiumpermanganat, Nickel-Cobalt-Lithium-Aluminat, Lithiumnickelat, Lithium-Eisen-Phosphat und Lithium-Vanadium-Phosphat umfasst.

8. Lithiumionenkondensator nach Anspruch 6, wobei die positive Elektrode 15 Positivelektrodenplatten umfasst, die negative Elektrode 16 Negativelektrodenplatten umfasst, wobei jede Elektrodenplatte eine Elektrodenplattengröße von 43 x 30 mm aufweist, eine Oberflächendichte der positiven Elektrode 160 g/m² beträgt und eine Oberflächendichte der negativen Elektrode 85 g/m² beträgt; der Separator ein Cellulose-Separator ist; und die dritte, metallisches Lithium umfassende Elektrode zwei, metallisches Lithium umfassende Elektrodenplatten umfasst, die auf zwei Seiten der Zelle angeordnet sind.

## Revendications

1. Procédé de formation de pré-dopage pour un condensateur aux ions du lithium ayant une électrode positive comprenant du carbone poreux et un oxyde de métal à lithium intercalé, une électrode négative comprenant du carbone non soumis à la graphitisation, et un collecteur de courant poreux, l'électrode positive, l'électrode négative et le collecteur de courant formant une cellule, **caractérisé en ce que** :
une troisième électrode de lithium métallique et la cellule sont agencées en tête-à-tête et séparées au moyen d'un séparateur, et le procédé comprend les étapes suivantes :
Étape 1, intercalation de lithium au niveau de l'électrode négative en prenant l'oxyde de lithium intercalé dans l'électrode positive en tant que source de lithium, et fourniture d'un courant entre l'électrode négative et l'électrode positive ;
Étape 2, approvisionnement, au moyen de la troisième électrode de lithium métallique, en ions lithium à l'oxyde de métal dans un état désintercalé au lithium de l'électrode positive, par l'apport d'un courant entre la troisième électrode de lithium métallique et l'électrode positive ; et
Étape 3, à la fin du chargement, découpe de la troisième électrode au lithium métallique de la cellule, et soudage des bords de la cellule pour obtenir le condensateur au lithium formé.

2. Procédé de formation pour le condensateur aux ions de lithium selon la revendication 1, dans lequel l'étape 1 est divisé en deux sous-étapes :
dans la première sous-étape, le courant est compris entre 0,01 C et 0,05 C, et le temps de chargement est compris entre 2 et 10 h ;
dans la seconde sous-étape, le courant est compris entre 0,2 C et 1 C.

3. Procédé de formation pour le condensateur aux ions de lithium selon la revendication 2, dans lequel le courant dans l'étape 2 est compris entre 0,2 C et 1 C.

4. Procédé de formation pour le condensateur aux ions de lithium selon la revendication 2, dans lequel dans l'étape 1, la charge totale apportée par le courant est comprise entre 20 % et 50 % de la capacité totale de l'électrode négative.

5. Procédé de formation pour le condensateur aux ions de lithium selon la revendication 2, dans lequel la charge apportée par le courant dans l'étape 2 est égale à la charge apportée par le courant dans l'étape 1.

6. Condensateur aux ions de lithium formé avec le procédé selon l'une quelconque des revendications précédentes.

7. Condensateur aux ions de lithium selon la revendication 6, dans lequel l'oxyde de métal au lithium intercalé dans l'électrode positive comprend l'un parmi l'oxyde de cobalt et de lithium, le manganate de lithium de cobalt et de nickel, la manganite de lithium, le manganate de lithium, le permanganate de lithium, l'aluminate de lithium de cobalt et de nickel, le nickelate de lithium, le phosphate de fer et de lithium, le phosphate de vanadium et de lithium.

8. Condensateur aux ions de lithium selon la revendication 6, dans lequel l'électrode positive comprend 15 plaques d'électrode positive, l'électrode négative comprend 16 plaques d'électrode négative, chaque plaque d'électrode ayant une taille de plaque d'électrode de 43 x 30 mm, une densité de surface d'électrode positive de 160 g/m², et une densité de surface d'électrode négative de 85 g/m², le séparateur est un séparateur de cellulose, et la troisième électrode de lithium métallique comprend deux plaques d'électrode de lithium métallique placées aux deux côtés de la cellule.
